# EUROPEAN PATENT SPECIFICATION

(11) **EP 1 088 480 B1**
(45) Date of publication and mention of the grant of the patent: **09.04.2003**
(21) Application number: 99906259.9
(22) Date of filing: 03.03.1999
(51) Int. Cl.: A01N 43/50

(54) **PROCESS FOR THE SELECTIVE UTILIZATION OF THE HERBICIDE IMAZETAPIR IN POST-EMERGENCE AND CULTIVATING VARIETIES OF SUNFLOWERS WHICH ARE RESISTANT OR TOLERANT TO SAID HERBICIDE AND APPLICATION TO THE CONTROL OF THE PARASITE FOXTAIL WEEDS (OROBANCHE CERNUA LOEFL./O. CUMANA WALLER)**
VEFAHREN ZUR SELEKTIVEN VERWENDUNG DES HERBIZIDS IMAZETHAPYR IM NACHAUFLAUFVERFAHREN UND ANBAU VON SONNENBLUMENVARIETÄTEN, DIE RESISTENT ODER TOLERANT GEGEN DIESES HERBIZID SIND, UND AUSBRINGUNG ZUR BEKÄMPFUNG VON PARASITÄREN FUCHSSCHWANZUNKRÄUTERN (OROBANCHE CERNUA LOEFL. / O. CUMANA WALLER)
PROCEDE D'UTILISATION SELECTIVE DE L'HERBICIDE IMAZETAPIR EN POST-EMERGENCE DE LA CULTURE DE VARIETES DE TOURNESOL QUI RESISTENT OU TOLERENT CET HERBICIDE ET SON APPLICATION DANS LA LUTTE CONTRE LES MAUVAISES HERBES PARASITES DE TYPE VULPIN ((OROBANCHE CERNUA LOEFL./O. CUMANA WALLER))

(30) Priority: 17.06.1998 ES 9801280
(43) Date of publication of application: 04.04.2001
(73) Proprietor: Koipesol Semillas, S.A., 41018 Sevilla (ES)
(72) Inventor: ALONSO ARNEDO, Luis Carlos, E-41089 Sevilla (ES); SALLAGO BERNAL, Francisco José, E-41015 Sevilla (ES); LOPEZ RUIZ-CALERO, Germán, E-41940 Tomares (ES); RODRIGUEZ OJEDA, M Isabel, E-41013 Sevilla (ES); FERNANDEZ ESCOBAR, Juan, E-14004 Córdoba (ES); REFOYO PIRIZ, Antonio, E-48018 Sevilla (ES)
(74) Representative: Ungria Lopez, Javier
(86) International application number: ES9900053
(87) International publication number: WO99065312

(56) References cited:
- ES-A1- 2 085 243
- ALONSO L.C. ET AL.: 'Chemical control of broomrape (Orobanche cernua Loefl.) in sunflower (Helianthus annuus L.) resistant to Imazethapyr herbicide' HELIA, vol. 21, no. 29, 1998, pages 45 - 53
- DON LILLEBOE.: 'Wild Opportunity?' THE SUNFLOWER, April 1997 - May 1997, pages 8 - 9
- GARCIA-TORRES L. ET AL.: 'Pre-emergence herbicides for the control of broomrape (Orobanche Cernua Loefl.) in sunflower (Helianthus annuus L.)' WEED RESEARCH, vol. 34, 1994, pages 395 - 402
- GARCIA-TORRES L., "Estado actual de las Infestaciones de Orobanche spp. en Andalucia y perspectivas para su control", Proceedings of the 1997 Congress of the Spanish Weed Science Society, Valencia (Spain) 24-26 November 1997, pages 181-185, Publisher: Sociedad Espanola de Malherbologia, Madrid.

## Description

### TECHNICAL FIELD OF THE INVENTION

The present invention is within the technical field of weed treatment of sunflower crops.
More specifically, the object of the present invention is to provide a process for the selective use of the herbicide imazethapyr in varieties of sunflower resistant to this herbicide and its application for the control of the parasitic weed broomrape.

Said process consists in applying said herbicide in Postemergence of the crop, by way of a conventional herbicide applicator, in determined phases of the development cycle of the crop and at equally determined doses of herbicide per 10,000m² (hectare).

With the process of the invention, by applying a herbicide in Postemergence and with no resulting damage to the sunflower crop, a high degree of control of the parasitic plant broomrape is obtained.

### STATE OF THE ART PRIOR TO THE INVENTION

The herbicide 2-[4,5-dihydro-4-methyl-4-(1-methylethyl)-5-oxo-1H-imidazol-2-il]-5-ethyl-3-piridincarboxylic acid, known commercially as imazethapyr and developed by American Cynamid, belongs to the *imidazolinone* family (Herbicide Handbook of the Weed Science Society of America, 6^{th} Ed. 1989, 157 and 158) and is presented commercially as diluted preparations such as PIVOT™, PIVOT-10™ and PURSUIT™ (10% imazethapyr).

Imazethapyr (Hart *et al.*, 1991. "The imidazoline herbicides", CRC Press. pp. 247-256) controls a wide spectrum of annual and perennial species, grasses and dicotyledons in various crops of leguminous plants such as soybean, peanut, peas and broad bean. It can be applied in Presowing; Preemergence and Postemergence of the weeds, in doses comprised between 30 and 125 g of active ingredient (a.i.) per 10,000m² (hectare).

The use of imazethapyr in Preemergence and Postemergence of broad bean (*Vicia faba* L.) has been described (*García-Torres*, *L and F. López Granados; 1991. "Control of broomrapes* (Orobanche crenata *Forsk.) in broad bean* (Vicia faba *L.) with imidazolinones and other herbicides"; Weed Research, 31:227-235)* for the control of *Orobanche crenata* at doses of approximately 75 to 100 g a.i./ 10,000m² (Ha) and of 20 to 40 g a.i./ 10,000m² (Ha) respectively. The use of imazethapyr has also been described (*García Torres et al., 1994. "Preemergence herbicides for the control of broomrapes (Orobanche crenata) in sunflower (Helianthus annuus)"; Weed Research, 34: 395-402)* in Presowing and Preemergence of sunflower crops *(Helianthus annuus* L) for the control of *Orobanche cernua* / *O. cumana.* The recommended dose in this case was of 20 to 40 g a.i./ 10,000m² (Ha), resulting in incomplete control of broomrape and causing occasional phytotoxicity in the sunflower at doses of 40 g a.i./ 10,000m² (Ha). The use of imazethapyr in Postemergence of sunflower has not been considered, due to its sensitivity to this herbicide.

The selective use of the imazethapyr herbicide for the control of *Orobanche crenata* has been developed in Presowing; Preemergence and Postemergence for broad bean crops and only in Presowing and Preemergence for the control of *O. cernua*/*O. cumana* for sunflower. Imazethapyr has been furthermore proposed for the control of broomrape (*O. crenata)* as treatment of seeds for broad bean, peas and lentils (Patents ES2083927, ES2083926 and ES2083929 respectively). All these uses of the imazethapyr herbicide are well differentiated from its application in Postemergence of sunflower crops, since this application implies an application of said herbicide at completely different stages of development; stages during which normal sunflower is sensitive to this herbicide. A population of wild sunflower (*Helianthus annuus* L.) that is resistant to the imazethapyr herbicide (*Don Lilleboe, 1997. Wild opportunity?. The sunflower, April*/*May, pp 8-9*) has been however, recently discovered in Rossville, Kansas, USA. Wild sunflower belongs to the same botanical species as farmed sunflower and the transfer of genes from one to the other does not present biological barriers. This naturally occurring genetic resistance has been transferred to cultivated sunflower.

With help from this genetic resistance to the imazethapyr herbicide found in a population of wild sunflower, we may apply the imazethapyr herbicide in Postemergence of sunflower crops. In the case of sunflower broomrape, it is particularly interesting to verify if the application of the herbicide in Postemergence of the crop is effective in the control of broomrape, since infection by the parasitic plant begins when the sunflower has approximately 6 true leaves and then progresses sequentially until around flowering time.

There is no reference whatsoever in the scientific literature to the selective Postemergence use of imazethapyr in sunflower for the control of broomrape. Neither do the patents for the development of the imidazolinone herbicides EP-227932; EP-434965; EP-473890 and EP-539676 contain any indication to the application of these herbicides in Postemergence of sunflower crops.

There is a Spanish Patent (ES2085243) referring to the use of the herbicide imazapyr in sunflower crops for the control of the parasitic weed broomrape (*Orobanche cernua* Loefl/*O. cumana* Wall). Imazapyr is a herbicide that is sold under the name ARSENAL® and is 2-(4-isopropyl-4-methyl-d5-oxo-2-imidazolin-2-il) nicotinic acid isopropylamid salt (1:1). Although this product belongs to the same herbicide family as imazethapyr (5-ethyl-2-(4-isopropyl-4-methyl-5-oxo-imidazolin-2-il) nicotinic acid), it is a distinct herbicide from imazethapyr.

In conclusion, imazethapyr has until now been used as a selective herbicide in crops of leguminous plants (soybean, lucerne, peas, broad bean), restricted in these cases to application in Presowing, Preemergence and Postemergence, and exclusively in Presowing at low doses (20-30 g a.i./ 10,000m² (Ha)) for the control of broomrape in sunflower crops.

### DETAILED DESCRIPTION OF THE INVENTION

The present invention, as indicated in its title, refers to a process for the selective use of the herbicide imazethapyr in Postemergence of crops of varieties of sunflower that are resistant or tolerant to this herbicide and to its application in the control of the parasitic weed broomrape (*Orobanche cernua* Loefl./*O.* cumana Waller).

The process for the use of imazethapyr that is the object of the present invention allows the expansion of the possibilities of use of the herbicide, exceeding the previously exposed limitations for sunflower.

The process for the use of the herbicide imazethapyr in sunflower, by way of the application in Postemergence in varieties resistant to the herbicide, gives rise to very special and advantageous eases of use, particularly for the control of broomrape, as compared with current methods:
- It allows the use of the herbicide in Postemergence.
- It results in effective control of broomrape.
- The efficiency of the herbicide in Postemergence is practically independent of environmental factors such as soil texture, precipitation, soil humidity content (as opposed to the case of applications in Preemergence). Said independence from environmental factors is a considerable advantage, especially in areas with highly variable weather conditions from one year to the next.
- Possibility of action at much later stages of crop development as compared with Preemergence treatments.
- It allows a better control of weeds, among them broomrape.
- It allows one or two herbicide treatments to be applied throughout the implantation and development periods of broomrape.
- It allows the control of the parasitic broomrape *(Orobanche cernua Lofl.*/*O. Cumana)* in sunflower crops corresponding to the wild sunflower population (*Helianthus annuus L.)* originating in Rossville (Kansas, USA) with genetic resistance to said herbicide.

The application of imazethapyr in Postemergence of crops of varieties of sunflower that are resistant to this herbicide, during the development stages of the crop and at the doses defined in the process of the invention, does not affect the development of the crop nor does it cause visibly detectable phytotoxicity in the sunflower plants.

The application of the herbicide imazethapyr in Postemergence of crops of varieties of sunflower that are resistant to this herbicide is done within the interval comprised between stage V10 (10 true leaves) and V18 (18 true leaves), with 15 to 25 days, depending on ambient temperature, comprised between said stages.

Application is usually done with a conventional applicator. A single application of the herbicide imazethapyr can be done between 26,6 to 106,4 g a.i./ 10,000m² (Ha) or two applications between 13,3 + 13,3 g a.i./ 10,000m² (Ha) to 53,2 + 53,2 g a.i./ 10,000m² (Ha) with the first application at the vegetative stage V10-V14, and the second one before the sunflower reaches the reproductive stage.

These sunflower development stages coincide with the broomrape development stages "c" (incipient and visible bud) and "d" (developed bud and roots). In said development stages of the sunflower crop and of the parasitic species, the imazethapyr treatments mentioned above are very efficient in the control of broomrape, and are well tolerated by the varieties of sunflower that are resistant to this herbicide. These treatments are however lethal to sunflower that is not resistant to the herbicide. The development stages of the parasitic species described above adjust to the methods described in scientific literature (*Mesa-García and García-Torres. 1985.* "Orobanche crenata *Forsk control in* Vicia faba *L. with glyphosate as affected by herbicide rates and parasite growth stage." Weed Research, 25: 129-134: Castejón et al., 1990. "Control of broomrape* (Orobanche crenata) *in sunflower* (Helianthus annuus *L.) with glyphosate". Crop Protection, 9: 332-336.*) These are:
a) Small nodules
b) Nodules with incipient roots
c) Nodules with visible bud
d) Nodules with highly visible bud and roots
e) Elongated and well-developed, but still subterranean bud.
f) Bud emerging from soil surface.

The sunflower growth stages described above were determined according to a commonly used method to this end (*Schneiter, A.A. and Miller, J.F., 1981 "Description of sunflower growth stages". Crop Science 21: 901-903)* modified so that abbreviations are: "Vn", vegetative stage, with n leaves; "R1" beginning of the reproductive stage, inflorescence with immature bracts; "R2", internode underneath the elongated flower head. "R3", open inflorescence.

The effect of imazethapyr applied at different times and in single or double application in Postemergence of sunflower varieties with resistance to this herbicide was studied in the following aspects:
Efficacy as assessed by control of the number of viable broomrape nodules in sunflower roots. Efficacy as assessed by control of the number of parasite buds emerging from the ground.
Apparent phytotoxicity toward the sunflower crop, as assessed by the presence of visible damage to the leaves and stalks and by the occurrence or non-occurrence of delayed growth.

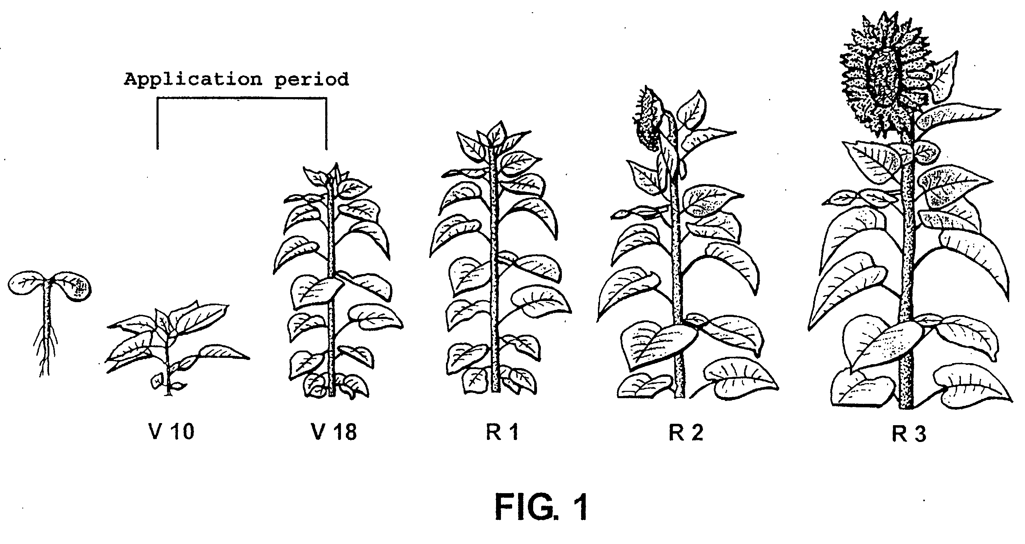

Figure 1 shows different sunflower development stages, indicating stages V10 to V18 as those when Postemergence treatment with imazethapyr should be applied for the control of broomrape.

The effect on efficacy in the control of *O. cernua* was determined by different means in separate trials. By counting the number of nodules (alive and dead) in the roots of resistant sunflowers treated with different imazethapyr doses twenty-five days after treatment.
By counting the number of emerging parasite buds in plants every 10 days after application of different doses of the herbicide.

The effect of the treatment on crop development and phytotoxicity were appraised every week following treatment. A simple visible scale was used: No damage, when growth of treated plant is identical to control untreated plants in all morphological aspects. With slight damage, when plants suffer some damage but recuperate well. With serious damage and/or death, when the damage is obvious or the plant died.

Results obtained in the trials carried out are shown hereafter in the examples:

### BRIEF DESCRIPTION OF DRAWINGS

**Figure 1.** Sunflower development stages in medium cycle crops.

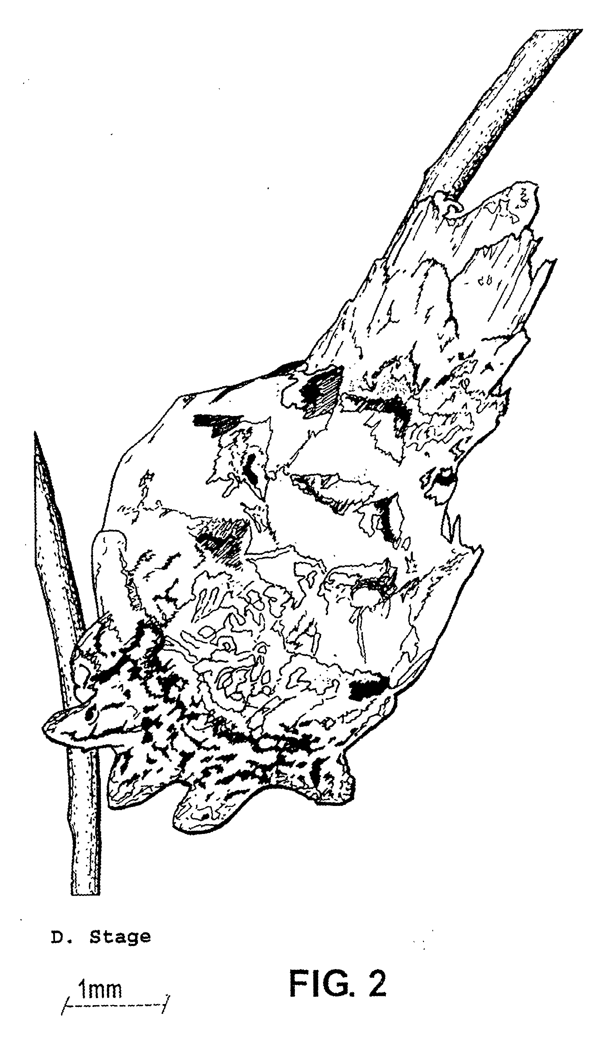

**Figure 2.** Healthy developing *Orobanche cernua*/*O. cumana* nodules in sunflower roots.

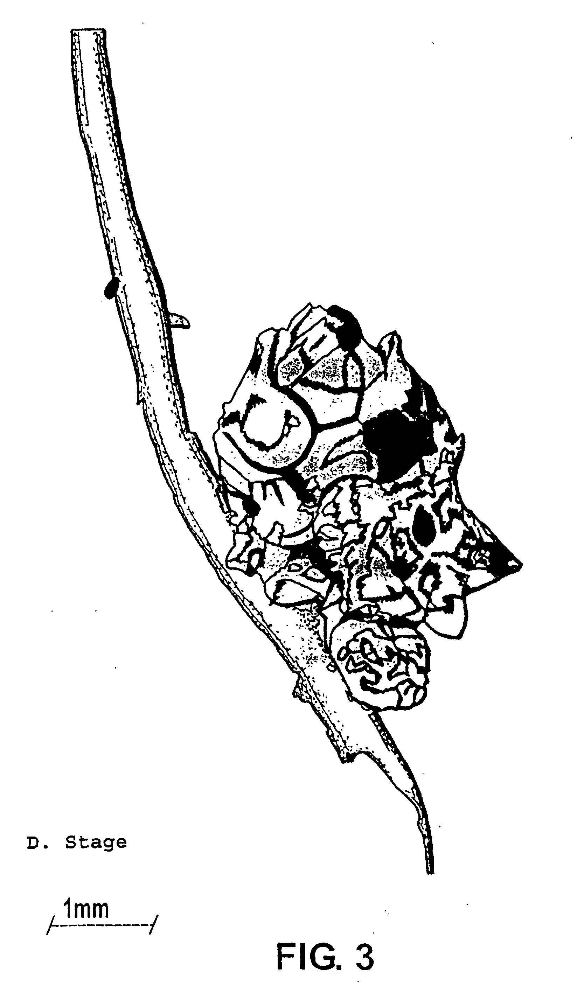

**Figure 3.** *Orobanche cernua*/*O. cumana* nodules necrosed by the action of the herbicide imazethapyr.

**Figure 4.** Graphic representation of the effect of imazethapyr treatment on the number of emerging broomrape buds in sunflower varieties resistant to this herbicide throughout the crop cycle.

### MODES OF EXECUTION OF THE INVENTION

The present invention is further illustrated by means of the following Examples:

### Example 1.

A trial was carried out to determine the dose of imazethapyr that can be used in Postemergence in varieties of sunflower resistant to this herbicide without causing damage to the crop. To this effect, plots were sown with around 100 plants (two 14 m rows) and different doses of imazethapyr were applied. 2 plots were used for each treatment of resistant sunflowers and two more were used for normal sunflowers. Doses used were: 26.6 g a.i./ 10,000m² (Ha); 53.2 g a.i./ 10,000m² (Ha); 106.4 g a.i./ 10,000m² (Ha); 212.8 g a.i./ 10,000m² (Ha); 425.6 g a.i./ 10,000m² (Ha); 851.2 g a.i./ 10,000m² (Ha).
Results are summarised in Table 1.

**Table 1.**

| **Effect of different doses of imazethapyr on resistant and classical varieties of sunflower.** | | | | | |
|---|---|---|---|---|---|
| Dose | Herbicide g a.i./ 10,000m² (Ha) | Sun-flower type | % plants with no damage | % resistant plants with slight damage | % susceptible damaged/dead plants |
| X | 26.6 | Resistant | 100% | 0% | 0% |
| 2X | 53.2 | Resistant | 95% | 5% | 0% |
| 4X | 106.4 | Resistant | 80% | 20% | 0% |
| 8X | 212.8 | Resistant | 0% | 80% | 20% |
| 16X | 425.6 | Resistant | 0% | 40% | 60% |
| 32X | 851.2 | Resistant | 0% | 18% | 82% |
| X | 26.6 | Common | 0% | 0% | 100% |
| 2X or + | 53.2 or + | Common | 0% | 0% | 100% |

From the result of this trial, it can be concluded that single treatment with imazethapyr in Postemergence should be done at doses between 26.6 g a.i./ 10,000m² (Ha) and 106.4 g a.i./ 10,000m² (Ha) when sunflower varieties resistant to this herbicide are used. Moreover, common sunflower varieties are confirmed to be sensitive to the lower doses of this trial. Symptoms of phytotoxicity begin showing at 106.4 g a.i./ 10,000m² (Ha) although a considerable proportion of plants can tolerate doses of around 16 times what could be considered as standard for weed control in tolerant crops such as soybean.

### Example 2

The trial was carried out in controlled conditions by sowing sunflower plants that are resistant to the herbicide imazethapyr in 330 cubic centimetre pots containing a mixture of soil, sand and peat in respective proportions of 4:5:5. Each pot was inoculated with 25 mg *O. cernua* seeds with 99% viability. Seedlings were grown in incubators with 16 hours of light and at a 24ºC/20ºC day/night temperature. When plants reached forty days of growth and showed 10 true leaves (V10), herbicide treatments were applied. Doses used were equivalent to 26.6 g a.i./ 10,000m² (Ha) and 53.2 g a.i./ 10,000m² (Ha). On groups of 40 plants for each treatment. One group of 46 plants was collected from the pots and the number of nodules per plants was counted at the time of treatment. Another group of 52 plants was not treated with herbicides. The untreated control group and the treated groups were counted twenty-five days after treatment. Results are shown in Table 2 hereafter.

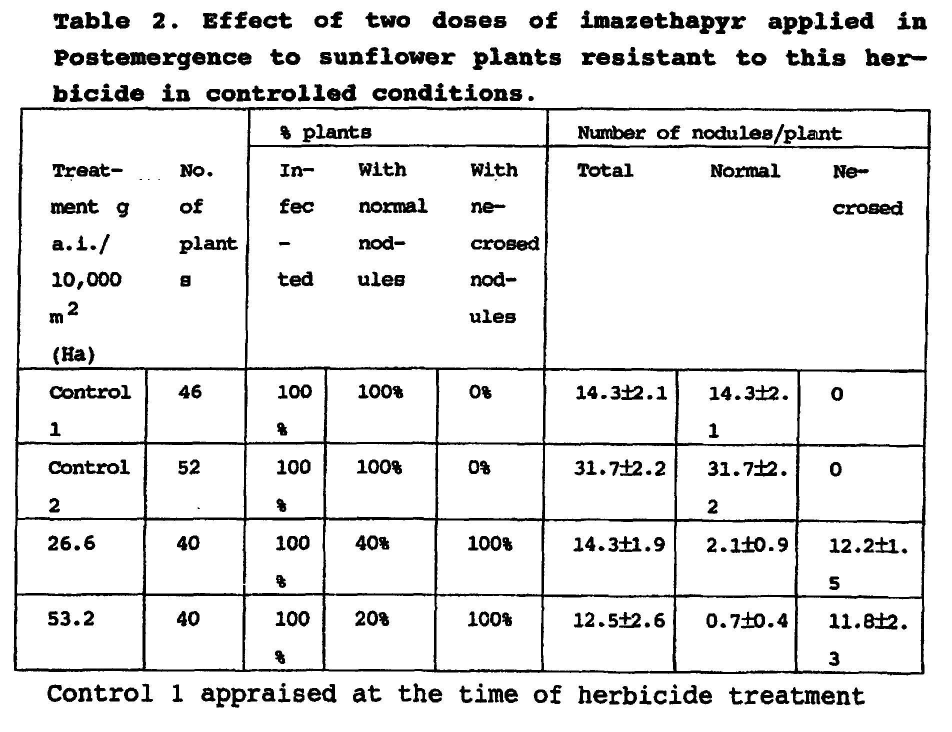

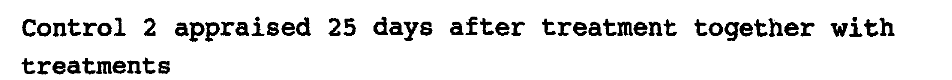

From the result of this trial, it can be seen that in plants not treated with herbicide, the number of broomrape nodules with normal aspect per sunflower plant increases from 14.4 nod/plant to 31.7 nod./plant. That is to say, there was a 220% increase. The number of nodules with normal aspect per plant was reduced by 85% and 95% for doses of 26.6 and 53.2 g a.i./ 10,000m² (Ha) respectively when compared with Control 1. These reductions were of 93.3 % and 97.8% for doses of 26.6 and 53.2 g a.i./ 10,000m² (Ha) respectively, when comparison is done with Control 2. From these observations, it can be said that while in untreated sunflower, broomrape proceeds with implantation during development, in imazethapyr resistant plants treated in Postemergence with this herbicide, already established nodules at the time of treatment undergo necrosis and others in the process of implantation do not proceed or do so at a stage undetectable by sight. Although some nodules show normal aspect in plants treated with the herbicide, this trial does not determine whether they are actually viable and will go on to flower or whether they are undergoing a necrotic process. In any case, the degree of control obtained is very satisfactory.

### Example 3.

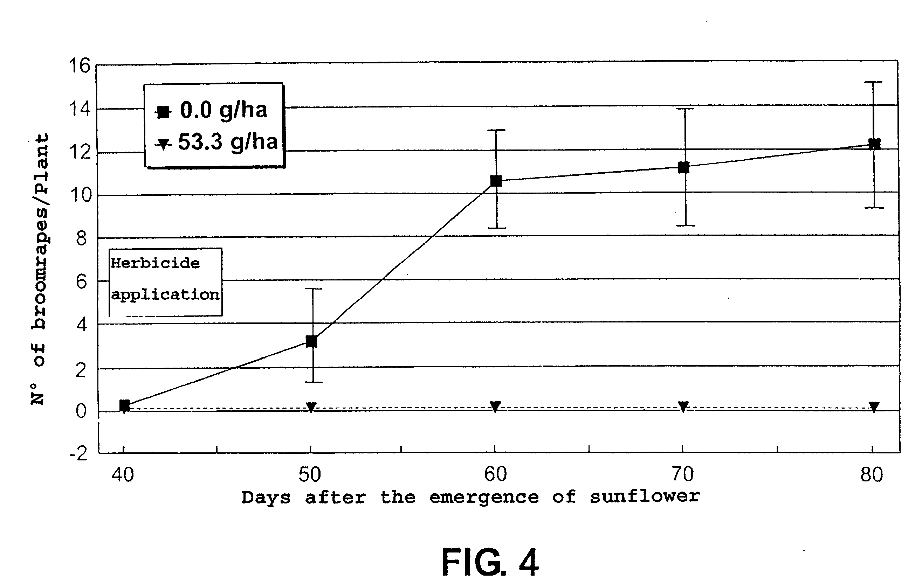

In this trial, individual imazethapyr resistant sunflower plants, artificially infected with 25 mg of *O. cernua*/*O. cumana* seed, were sown in 5 litre pots. Plants were grown in the pots and, when they possessed 10 true leaves, were separated in two sets of 30 plants each. One of them was treated exclusively with water. The other with a dose equivalent to 53.2 g a.i./ 10,000m² (Ha) imazethapyr. Plants were allowed to grow until the end of their cycle and the number of emerging buds was recorded every ten days.
Results of this trial are presented in the drawing in Figure 4.
From these results, it can be said that imazethapyr used in Postemergence at a dose of 53.2 g a.i./ 10,000m² (Ha) efficiently prevents the apparition of emerging broomrape buds.

### Example 4.

In this trial, corroboration was attempted between results obtained in pots artificially inoculated with broomrape seeds and field conditions. Two fields with a known history of broomrape infection were therefore selected. These fields are located in Ecija and La Carlota. Each field was sown in plots of two 5-meter rows with imazethapyr resistant sunflower. The following imazethapyr treatments were applied in Postemergence when the sunflower plants showed 10 true leaves: 26.6; 53.2 and 106.4 g a.i./ 10,000m² (Ha). Three doubles treatments were also used: 13.3 +13.3; 26.6 + 13.3 and 26.5 + 26.6 g a.i./ 10,000m² (Ha), with first treatment when sunflowers showed 10 true leaves and second treatment two weeks thereafter. Each treatment was performed in triplicate for each of the two locations. Emerging broomrape buds per plants were counted throughout the cycle until the end of flowering of the sunflower. A visual estimate of the level of phytotoxicity was also carried out. In each location, three replicates were left without any treatment. Results of this trial are summarised in Table 3 hereafter.

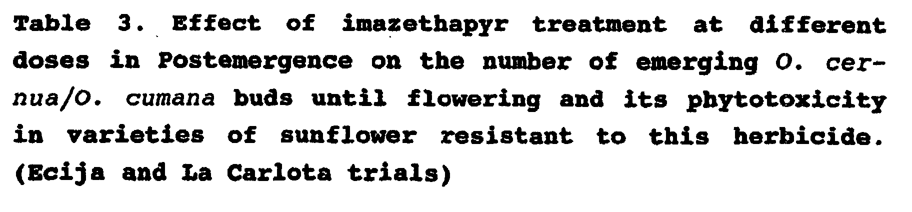

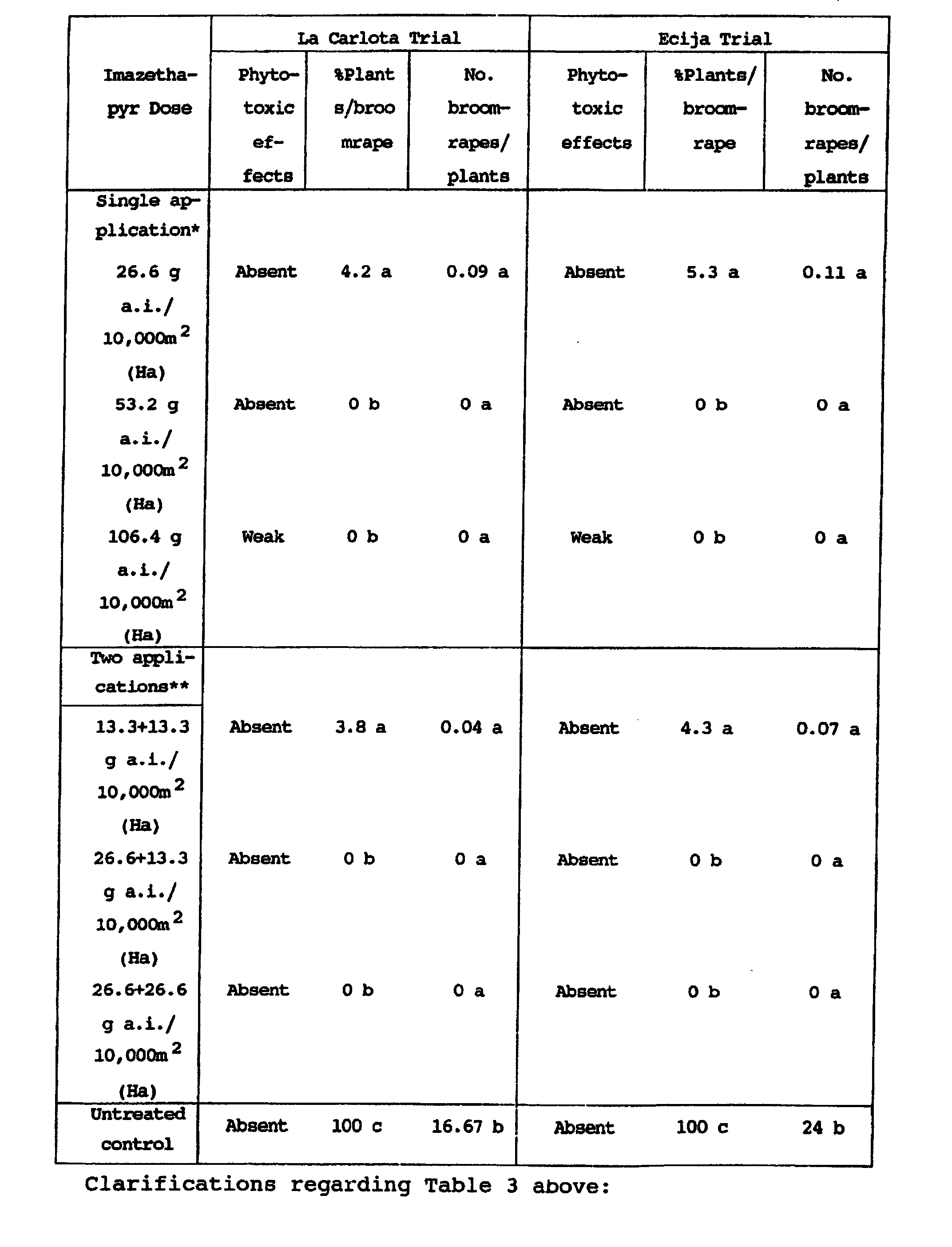

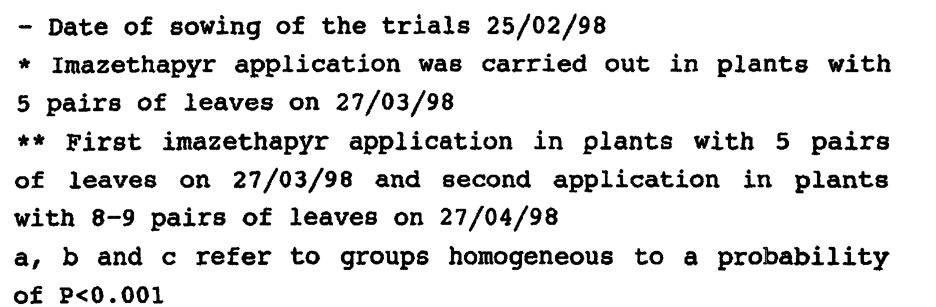

In all treatments, a very efficacious control of the parasitic weed broomrape (*Orobanche cernua* Loeftl./*O.* cumana Waller) in sunflower resistant to the herbicide imazethapyr, can be appreciated.

## Claims

1. A process for the selective application of the herbicide imazethapyr to the control of the parasitic weed broomrape (*Orobanche cernua* Loefl./*O*. *cumana* Waller), in a sunflower crop of a variety resistant or tolerant to the herbicide, wherein said herbicide is applied in Postemergence phase of said sunflower crop in a single or double application, of a solution of said herbicide by means of a conventional applicator with regulation of pressure and of the volume of the solution to be applied per unit of surface.

2. A process according to claim 1, wherein the single application comprises applying the herbicide at doses between 26.6 and 106.4 g. of active ingredient per 10,000m² (hectare), when the sunflower crop is in the intermediate-advanced vegetative stage, coinciding in intermediate cycle crops with a development of between 10 to 18 true leaves.

3. A process according to claim 1, wherein the double application comprises applying the herbicide at a first dose between 13.3 and 53.2 g of active ingredient per 10,000m² (hectare) in a first application when the intermediary cycle sunflower shows between 10 and 14 true leaves, and a second application before the sunflower reaches the reproductive stage, at a second dose between 13.3 and 53.2 g of active ingredient per 10,000m² (hectare).

4. A method of using the herbicide imazethapyr for controlling parasitic weed broomrape (*Orobanche cernua* Loefl./*O. cumana*) in a sunflower crop having genetic resistance to said herbicide, the method comprising applying said herbicide at doses higher than doses tolerated by common sunflower crops not having said genetic resistance, and lower than 106.4 g. of active ingredient per 10,000m², wherein the genetic resistance of the sunflower crop originates from a wild sunflower population *(Helianthus annuus* L) originating in Rossville (Kansas, USA) and wherein the herbicide is applied in a stage of postemergence of the sunflower crop.

5. A method according to claim 4, wherein the herbicide is applied in a single application at doses between 26.6 and 106.4 g. of active ingredient per 10,000m² (hectare), when the sunflower crop is in the intermediate-advanced vegetative stage, coinciding in intermediate cycle crops with a development of 10 to 18 true leaves.

6. A method according to claim 4, wherein the herbicide is applied in a first application at a first dose between 13.3 and 53.2 g of active ingredient per 10,000m² (hectare) when the sunflower is in an intermediate cycle and has between 10 and 14 true leaves, and in a second application before the sunflower reaches its reproductive stage at a second dose between 13.3 and 53.2 g of active ingredient per 10,000m² (hectare).

## Patentansprüche

1. Verfahren zur selektiven Anwendung des Herbizids Imazethapyr zum Bekämpfen des parasitären Unkrauts Sommerwurz (Orobanche cernua Loefl./O. cumana Waller) bei Sonnenblumenpflanzen einer Varietät, die resistent oder tolerant gegenüber dem Herbizid ist, wobei das Herbizid in der Nachauflaufphase der Sonnenblumenpflanzen anhand einer einzelnen oder einer doppelten Anwendung einer Lösung des Herbizids durch ein herkömmliches Pflanzenschutzgerät ausgebracht wird, bei dem der Druck und das pro Einheit Oberfläche auszubringende Volumen der Lösung reguliert werden können.

2. Verfahren nach Anspruch 1, wobei die einzelne Anwendung das Ausbringen des Herbizids in Dosen zwischen 26,6 und 106,4 g Wirkstoff pro 10 000 m² (Hektar) umfasst, wenn die Sonnenblumenpflanzen im fortgeschrittenen vegetativen Zwischenstadium vorliegen, entsprechend Pflanzen im Zwischenzyklus, bei denen 10 bis 18 echte Blätter entwickelt sind.

3. Verfahren nach Anspruch 1, wobei die doppelte Anwendung das Ausbringen des Herbizids mit einer ersten Dosis zwischen 13,3 und 53,2 g Wirkstoff pro 10 000 m² (Hektar) bei einer ersten Anwendung, wenn die Sonnenblume im Zwischenzykus 10 bis 14 echte Blätter aufweist, und ein zweites Ausbringen, bevor die Sonnenblume das Reproduktionsstadium erreicht, mit einer zweiten Dosis zwischen 13,3 und 53,2 g Wirkstoff pro 10 000 m² (Hektar) umfasst.

4. Verfahren zur Verwendung des Herbizids Imazethapyr zum Bekämpfen des parasitären Unkrauts Sommerwurz (Orobanche cernua Loefl./O. cumana) bei Sonnenblumenpflanzen, die eine genetische Resistenz gegenüber dem Herbizid aufweisen, wobei das Verfahren das Ausbringen des Herbizids in Dosen umfasst, die höher sind als die Dosen, die durch herkömmliche Sonnenblumenpflanzen, welche keine genetische Resistenz aufweisen, toleriert werden, und die niedriger sind als 106,4 g Wirkstoff pro 10 000 m², wobei die genetische Resistenz der Sonnenblumenpflanzen von einer wilden Sonnenblumenpopulation (Helianthus annuus L) stammt, die in Rossville (Kansas, USA) beheimatet ist, und wobei das Herbizid in einem Nachauflaufstadium der Sonnenblumenpflanzen angewendet wird.

5. Verfahren nach Anspruch 4, wobei das Herbizid in einer einzelnen Anwendung mit Dosen zwischen 26,6 und 106,4 g Wirkstoff pro 10 000 m² (Hektar) ausgebracht wird, wenn die Sonnenblumenpflanzen in dem fortgeschrittenen vegetativen Zwischenstadium vorliegen, entsprechend Pflanzen im Zwischenzyklus, bei denen 10 bis 18 echte Blätter entwickelt sind.

6. Verfahren nach Anspruch 4, wobei das Herbizid in einer ersten Anwendung mit einer ersten Dosis zwischen 13,3 und 53,2 g Wirkstoff pro 10 000 m² (Hektar), wenn die Sonnenblume in einem Zwischenzyklus vorliegt und zwischen 10 und 14 echte Blättem aufweist, und in einer zweiten Anwendung, bevor die Sonnenblume ihr Reproduktionsstadium erreicht, mit einer zweiten Dosis zwischen 13,3 und 53,2 g Wirkstoff pro 10 000 m² (Hektar) ausgebracht wird.

## Revendications

1. Procédé d'utilisation sélective de I'herbicide imazéthapyr pour le contrôle de l'orobanche parasite *(Orobanche cernua* Loefl./*O*. *cumana* Waller), dans la culture d'une variété de tournesol résistant ou tolérant à l'herbicide, dans lequel ledit herbicide est utilisé dans la phase de levée de ladite culture de tournesol en application unique ou double d'une solution dudit herbicide à l'aide d'un applicateur conventionnel avec réglage de la pression et du volume de la solution à utiliser par unité de surface.

2. Procédé selon la revendication 1, dans lequel l'utilisation unique comprend l'application de l'herbicide à des doses comprises entre 26,6 et 106,4 g de principe actif pour 10 000 m² (hectare) lorsque la culture de tournesol se trouve à l'étape végétative intermédiaire à avancée, coïncidant dans les cultures de cycle intermédiaire, avec le développement de 10 à 18 vraies feuilles.

3. Procédé selon la revendication 1, dans lequel l'utilisation double comprend l'application de l'herbicide à une première dose comprise entre 13,3 et 53,2 g d'ingrédient actif pour 10 000 m² (hectare) au cours d'une première application lorsque le tournesol du cycle intermédiaire présente de 10 à 14 vraies feuilles et une deuxième application avant que le tournesol ne parvienne à l'étape de reproduction, à une deuxième dose comprise entre 13,3 et 53,2 g de principe actif pour 10000 m² (hectare).

4. Procédé d'utilisation de l'herbicide imazéthapyr pour le contrôle de l'orobanche parasite *(Orobanche cernua* Loefl./*O. cumana)* dans une culture de tournesol présentant une résistance génétique audit herbicide, le procédé comprenant l'application dudit herbicide à des doses supérieures aux doses tolérées par les cultures de tournesol commun ne présentant pas ladite résistance génétique, et moins de 106,4 g de principe actif pour 10000 m², dans lequel la résistance génétique de la culture de tournesol provient d'une population de tournesol sauvage (*Helianthus annuus* L) originaire de Rossville (Kansas, USA) et dans lequel l'herbicide est appliqué à un stade consécutif à la levée de la culture de tournesol.

5. Procédé selon la revendication 4, dans lequel l'herbicide est appliqué à des doses comprises entre 26,6 et 106,4 g de principe actif pour 10000 m² hectare), lorsque la culture de tournesol se trouve au stade végétatif intermédiaire à avancé, coïncidant dans les cultures de cycle intermédiaire, avec le développement de 10 à 18 vraies feuilles.

6. Procédé selon la revendication 4, dans lequel l'herbicide est utilisé au cours d'une première application à une première dose comprise entre 13,3 et53,2 g de principe actif par 10 000 m² (hectare) lorsque le tournesol se trouve à un cycle intermédiaire et présente de 10 à 14 vraies feuilles, et au cours d'une deuxième application avant que le tournesol n'atteigne son stade de reproduction, à une deuxième dose comprise entre 13,3 et 53,2 g de principe actif pour 10 000 m² (hectare).
